Europäisches Patentamt

European Patent Office

Office européen des brevets

(19)

(11) Numéro de publication: **0 223 087**
**B1**

(12)

# FASCICULE DE BREVET EUROPEEN

(45) Date de publication du fascicule du brevet:
23.05.90

(51) Int. Cl.⁵: **H01B 3/30**, H01B 19/02

(21) Numéro de dépôt: **86114527.4**

(22) Date de dépôt: **21.10.86**

---

(54) **Procédé d'isolation par imprégnation de conducteurs électriques.**

---

(30) Priorité: **22.10.85 FR 8515667**

(43) Date de publication de la demande:
**27.05.87 Bulletin 87/22**

(45) Mention de la délivrance du brevet:
**23.05.90 Bulletin 90/21**

(84) Etats contractants désignés:
**AT BE CH DE ES FR GB IT LI SE**

(56) Documents cités:
**DE-A- 3 121 725**
**DE-B- 2 655 367**
**FR-A- 2 550 373**

**IEEE TRANSACTIONS ON ELECTRICAL INSULATION,
vol. EI-13, no. 6, Décembre 1978, pages 436-443, IEEE,
New York, US; S.ISOBE et al.: "Large capacity class-H
resin molded transformer"**

(73) Titulaire: **GEC ALSTHOM SA, 38, avenue Kléber,
F-75116 Paris(FR)**

(72) Inventeur: **Anton, Alain, Rue de Beauregard Chaponnay,
F-69360 Saint Symphorien d'Ozon(FR)**
Inventeur: **Dubuisson, Alain, 1 rue du Berry Les Grillons
II, F-69330 Meyzieu(FR)**

(74) Mandataire: **Weinmiller, Jürgen et al,
Lennéstrasse 9 Postfach 24, D-8133 Feldafing(DE)**

---

## Description

La présente invention concerne un procédé d'isolation par imprégnation de conducteurs électriques à l'aide de résines à cycles isocyanurates et oxazolidones, dans lequel on enroule autour des conducteurs un ruban de tissu ou feutre de verre, ou film de matière plastique, et de papier de mica poreux, on imprègne le ruban d'un vernis comprenant une résine liquide polymérisable, puis on soumet le ruban imprégné à un traitement thermique de polymérisation.

La demanderesse a déjà proposé dans sa demande de brevet FR-A-2550373 ou son brevet US-A-4543272 un procédé d'isolation de ce genre, dans lequel on imprègne le ruban d'un halogènure de benzyltrialkylammonium à chaine alkyle contenant au plus 3 atomes de carbone et d'une résine époxy liquide, on le sèche à une température au plus égale à 135°C, puis on l'imprègne d'un vernis à base de dérivé isocyanate, avant de soumettre le ruban au traitement thermique de polymérisation. Bien que l'isolation ainsi obtenue soit très satisfaisante et présente d'excellentes propriétés électriques, on recherche cependant à améliorer encore le collage entre le tissu ou feutre de verre ou film de matière plastique et le papier de mica poreux du ruban, et à augmenter le souplesse du ruban obtenu, notamment en vue de l'isolation de conducteurs de faible diamètre.

La présente invention a pour but de procurer une isolation à ruban très souple et mécaniquement résistant, ne présentant pas de fragilité, et facile à enrouler autour des conducteurs à l'aide d'une machine.

Le procédé selon l'invention est caractérisé en ce que l'on additionne initialement le ruban d'un liant entre le tissu ou feutre de verre, ou film de matière plastique, et le papier de mica poreux, ce liant contenant un polymère à chaînes de groupes oxazolidones contenant des groupes terminaux époxy, et en ce que la résine liquide polymérisable du vernis contient essentiellement des isocyanates qui se transformeront en groupes isocyanurates durant la polymérisation.

Il répond en outre de préférence à au moins l'une des caractéristiques suivantes :
- Le liant est ajouté au ruban en proportion d'environ 20% en poids.
- Le liant est ajouté au ruban par voie humide, de préférence en dissolution dans de la méthyléthylcétone.
- Le ruban est exempt d'intercalaire antiadhésif.
- Le vernis d'imprégnation est exempt de solvant.
- le liant du ruban est obtenu par réaction d'une résine époxyde sur un isocyanate en présence d'un catalyseur de condensation, puis mélange du produit de condensation avec une résine époxy.
- on ajoute au mélange du produit de condensation et d'une résine époxy un catalyseur de réaction des groupes époxy sur les groupes isocyanates.
- le vernis d'imprégnation à base de dérivés isocyanates est additionné d'une faible quantité de dérivés époxy et d'un stabilisant.

Le procédé de l'invention permet de former au sein du mur isolant du conducteur une résine à structure contrôlée comportant d'une part des blocs polymères linéaires à enchaînements oxazolidones, principalement concentrés dans le ruban micacé, d'autre part des blocs polymères réticulés à enchaînements isocyanurates, apportés par le vernis d'imprégnation, qui serviront de noeuds pour la formation d'un réseau macromoléculaire tridimensionnel.

Le fait d'employer un liant constitué par une résine à enchaînements oxazolidones avec des groupes terminaux époxy assure un très bon collage entre le tissu ou feutre de verre, ou le film de matière plastique, et le papier de mica, en raison de la bonne mouillabilité du mica par une telle résine et de son fort pouvoir adhésif sur le verre, qui se conserve à température élevée, jusqu'au-dessus de 200° C. Le ruban formé présente une très grande souplesse, son liant étant un polymère linéaire de nature thermoplastique. Cette souplesse facilite beaucoup sa mise en place sur des conducteurs fins.

La présence d'une proportion d'environ 20 % en poids de liant de collage entre le tissu ou feutre de verre, ou film de matière plastique, et le papier de mica poreux, permet une bonne imprégnation par le vernis sous vide et pression, et réduit la fragilité du ruban, notable pour les rubans dits "secs" à environ 8 % de liant, qui risque d'entrainer des cassures du mica lors de la pose du ruban, et par suite des dispersions dans les valeurs de rigidité diélectrique.

L'absence d'intercalaire facilite l'enrubannage des conducteurs à la machine.

Par ailleurs, le vernis d'imprégnation est à seul composant, sans solvant. Il est très stable à la température ambiante, où sa viscosité est suffisamment faible pour lui permettre d'imprégner facilement le bobinage enrubanné. Ce vernis devient très réactif vers 150 ° C en présence des sites actifs du réseau du polymère du ruban. Cela favorise la gélification de la résine imprégnante et conduit à une faible consommation du vernis d'imprégnation. On peut admettre que les fonctions époxydes présentes dans le ruban réagissent rapidement avec le vernis d'imprégnation en formant deux types d'hétérocycles, dont essentiellement des isocyanurates qui rigidifient la résine, même en l'absence de catalyseur. Il est même préférable que le vernis ne contienne pas de catalyseur. Les hétérocycles ainsi formés procurent un gain en résistances thermique et mécanique par rapport aux isolants silicones souvent employés dans des applications similaires.

Il est décrit ci-après à titre d'exemples des procédés d'isolation par imprégnation de conducteurs électriques selon l'invention.

EXEMPLE 1

a) formation d'un ruban

On utilise un papier de mica poreux à 120 g/m², un tissu de verre à 25 g/m² et une poudre de collage à motifs oxazolidones et terminaisons époxydes à 36 g/m², en proportion de 20% en poids.

Le liant est obtenu en faisant réagir une résine liquide époxyde commercialisée sous la désignation Epon® 827 par SHELL CHEMICAL Co et du toluène diisocyanate en présence de chlorure de benzyltriméthylammonium dans l'éthanol. On forme ainsi uniquement un polymère à chaînes de cycles oxazolidones avec des terminaisons époxydes.

Ce produit est mélangé ensuite avec des résines époxydes non modifiées et mis en solution dans de la méthyléthylcétone pour faciliter la fabrication du ruban, les proportions étant

- 30 parties du polymère à chaînes de cycles oxazolidones et terminaisons époxydes.
- 60 parties de résine époxyde liquide commercialisée sous la désignation DEN® 438 par DOW CHEMICAL Co.
- 10 parties de résine époxyde liquide commercialisée sous la désignation EPON® 827.
- 150 parties de méthylethylcétone.

On peut alors incorporer dans le ruban un catalyseur, par exemple deux parties de trifluorure de bore bloqué commercialisé sous la désignation Anchor® 1115 par ANCHOR CHIMIE.

b) formation de vernis d'imprégnation

on mélange
- 93 parties d'isocyanates commercialisés sous la désignation K88 par BAYER
- 7 parties de la résine époxy liquide EPON® 827
- 0,2 partie d'anhydride maléique jouant le rôle de stabilisant.

On réalise une "motorette" formant maquette d'essais, représentant à l'échelle du laboratoire les induits d'un moteur, et constituée d'un faisceau de 12 conducteurs en cuivre guipé, ayant chacun une section rectangulaire de 4,5 x 2 mm² et une longueur de 450 mm. Ce faisceau est isolé à l'aide de quatre demi-recouvrements du ruban ci-dessus, plus une couche de polyimide (commercialisé sous la marque "Kapton"® par DU PONT DE NEMOURS). Elle a été imprégnée sous vide et pression alternés par le vernis ci-dessus, puis gélifiée 2 heures à 150°C. Enfin elle est polymérisée 15 heures à 200°C.

Des essais de résistance au claquage dans l'huile ont donné une rigidité diélectrique minimale de 39 kV, pour une épaisseur d'isolation inférieure à 1 mm.

EXEMPLE 2

On emploie le même ruban que celui décrit dans la partie a) de l'exemple 1.

Le vernis d'imprégnation est constitué uniquement du polyisocyanate commercialisé sous la désignation OPA® 235 par UP JOHN CHEMICAL Co.

On peut ajouter une partie de chlorure de benzyltriéthylammonium comme catalyseur (sans que cela soit nécessaire).

Une motorette réalisée dans les mêmes conditions que précédemment présente une rigidité diélectrique minimale de 36 kV.

EXEMPLE 3

La structure du ruban est analogue à celle de l'exemple 1, mais sa résine de collage est différente.

On forme d'abord un polymère à motifs oxazolidones à terminaisons époxydes en faisant réagir la résine époxyde cycloaliphatique commercialisée par la société Ciba-Geigy sous la désignation CY-192 et du toluène diisocyanate en présence de chlorure de benzyltriméthylammonium dans l'éthanol.

Ce produit est mélangé avec une résine époxy liquide et mis en solution dans la méthyléthylcétone pour la réalisation du ruban dans les proportions

- 105 parties du produit réactionnel ci-dessus
- 45 parties de la résine époxyde CY-192
- 100 parties de méthyléthylcétone.

On peut ajouter dans le ruban un catalyseur, sans que cela soit nécessaire.

On utilise le même vernis que dans l'exemple 1 et effectue de même l'imprégnation, la gélification et la polymérisation de l'isolant.

La rigidité diélectrique minimale est de 35 KV.

EXEMPLE 4

On utilise le même papier de mica et le même tissu de verre que dans l'exemple 1.

On obtient le liant en mélangeant la résine époxyde liquide cycloaliphatique commercialisée par la Société Ciba-Geigy sous la désignation CY-179 et le polyisocyanate OPA® 235 déjà cité dans l'exemple 2, en présence de chlorure de lithium dans le méthanol.

Ce produit est mélangé avec une résine époxyde et mis en solution dans la méthyléthylcétone.

On utilise alors le même vernis que dans l'exemple 1 et effectue de même l'imprégnation, la gélification et la polymérisation de l'isolant.

La rigidité diélectrique minimale est de 38 KV.

**Revendications**

1/ Procédé d'isolation par imprégnation de conducteurs électriques à l'aide de résines à cycles isocyanurates et oxazolidones, dans lequel on enroule autour des conducteurs un ruban de tissu ou feutre de verre, ou film de matière plastique, et de papier de mica poreux, on imprègne le ruban d'un vernis comprenant une résine liquide polymérisable, puis on soumet le ruban imprégné à un traitement thermique de polymérisation, caractérisé en ce que l'on additionne initialement le ruban d'un liant entre le tissu ou feutre de verre, ou film de matière plastique, et le papier de mica poreux, ce liant centenant un polymère à chaînes de groupes oxazolidones contenant des groupes terminaux époxy, et en ce que la résine liquide polymérisable du vernis contient essentiellement des isocyanates qui se transformeront en groupes isocyanurates durant la polymérisation.

2/ Procédé selon la revendication 1, caractérisé en ce que le liant est ajouté au ruban en proportion d'environ 20% en poids.

3/ Procédé selon les revendications 1 ou 2, caractérisé en ce que le liant est ajouté au ruban par voie humide, de préférence en dissolution dans de la méthyléthylcétone.

4/ Procédé selon l'une des revendications 1 à 3, caractérisé en ce que le ruban est exempt d'intercalaire antiadhésif.

5/ Procédé selon l'une des revendications 1 à 4, caractérisé en ce que le vernis d'imprégnation est exempt de solvant.

6/ Procédé selon l'une des revendications 1 à 5, caractérisé en ce que le liant du ruban est obtenu par réaction d'une résine époxyde sur un isocyanate en présence d'un catalyseur de condensation, puis mélange du produit de condensation avec une résine époxy.

7/ Procédé selon la revendication 6, caractérisé en ce que l'on ajoute au mélange du produit de condensation et d'une résine époxy un catalyseur de réaction des groupes époxy sur les groupes isocyanates.

8/ Procédé selon l'une des revendications 1 à 7, caractérisé en ce que le vernis d'imprégnation à base de dérivés isocyanates est additionné d'un faible quantité de dérivés époxy et d'un stabilisant.

## Claims

1. A method of insulating electrical conductors by impregnating them with isocyanurate and oxazolidone cycles, wherein a tape of porous mica paper and of glass felt or cloth or plastic material film is wound round the conductors, wherein the tape is impregnated with a varnish comprising a polymerizable liquid resin, and whereupon the impregnated tape is polymerized by heat treatment, characterized in that a binder is initially added to the tape between the porous mica paper and the glass felt or cloth or the plastic material film, said binder containing a polymer having chains of oxazolidine groups containing groups with epoxy terminations, and that the polymerizable liquid resin of the varnish essentially contains isocyanate which is transformed into isocyanurate groups during polymerization.

2. A method according to claim 1, characterized in that the binder is added to the tape at a concentration of about 20% by weight.

3. A method according to claim 1, characterized in that the binder is added to the tape by a wet process, preferably when dissolved in methylethylketone.

4. A method according to one of the claims 1 to 3, characterized in that the tape is free from an antiadhesive intermediate layer.

5. A method according to one of the claims 1 to 4, characterized in that the impregnating varnish is free from solvent.

6. A method according to one of the claims 1 to 5, characterized in that the tape binder is obtained by making react an epoxy resin with an isocyanate in the presence of a condensation catalyst, and then by mixing the product of the condensation with an epoxy resin.

7. A method according to claim 6, characterized in that a catalyst is added to the mixture of the condensation product and epoxy resin for catalyzing the reaction of the epoxy groups with the isocyanate groups.

8. A method according to anyone of the claims 1 to 7, characterized in that the impregnating varnish based on isocyanate derivatives has a small quantity of epoxy derivatives and a stabilizer added thereto.

## Patentansprüche

1. Tränkungsisolierverfahren für elektrische Leiter unter Verwendung von Harzen mit Isocyanurat- und Oxyzolidonzyklen, bei dem um die Leiter ein Band aus Glasgewebe oder Glasfilz oder einer Kunststoffolie und porösem Mikapapier gewickelt, das Band mit einem ein flüssiges, polymerisierbares Harz enthaltenden Lack getränkt, und das getränkte Band dann einer thermischen Polymerisationsbehandlung unterzogen wird, dadurch gekennzeichnet, daß dem Band anfänglich zwischen dem Glasgewebe oder Glasfilz oder Kunststoffolie und dem porösen Mikapapier ein Bindemittel beigegeben wird, das ein Polymer mit kettenförmigen Oxyzolidongruppen enthält, die Epoxyabschlußgruppen enthalten, und daß das polymerisierbare flüssige Harz des Lacks hauptsächlich Isocyanate enthält, die sich während des Polymerisierens in Isocyanuratgruppen umwandeln.

2. Verfahren nach Anspruch 1, dadurch gekennzeichnet, daß das Bindemittel dem Band mit einem Gewichtsanteil von 20% beigegeben wird.

3. Verfahren nach einem der Ansprüche 1 bis 3, dadurch gekennzeichnet, daß das Bindemittel dem Band auf nassem Wege, vorzugsweise in Methyläthylketon gelöst, beigegeben wird.

4. Verfahren nach einem der Ansprüche 1 bis 3, dadurch gekennzeichnet, daß das Band frei von Antiklebeeinlagen ist.

5. Verfahren nach einem der Ansprüche 1 bis 4, dadurch gekennzeichnet, daß der Imprägnierungslack lösungsmittelfrei ist.

6. Verfahren nach einem der Ansprüche 1 bis 5, dadurch gekennzeichnet, daß das Bindemittel in Anwesenheit eines Kondensationskatalysators durch Reaktion eines Epoxydharzes mit einem Isocyanat und durch anschließendes Mischen des Kondensationsproduktes mit einem Epoxyharz gewonnen wird.

7. Verfahren nach Anspruch 6, dadurch gekennzeichnet, daß dem Gemisch aus Kondensationsprodukt und Epoxyharz ein Katalysator für die Reaktion der Epoxygruppen mit den Isocyanatgruppen beigegeben wird.

8. Verfahren nach einem der Ansprüche 1 bis 7, dadurch gekennzeichnet, daß dem Imprägnierungslack auf der Basis von Isocyanatderivaten eine kleine Menge von Epoxyderivaten und ein Stabilisator beigegeben werden.